# EUROPEAN PATENT APPLICATION

(11) **EP 4 285 722 A1**
(43) Date of publication of application: **06.12.2023**
(21) Application number: 22382533.2
(22) Date of filing: 01.06.2022
(51) Int. Cl.: A01N 27/00, A01N 35/06, A01N 49/00, A01P 5/00, A01N 65/12

(54) **USE OF CAROTENOID COMPOSITION FOR NEMATODE CONTROL**

(71) Applicant: Idai Nature, S.L., 46185 La Pobla de Vallbona (Valencia) (ES)
(72) Inventor: YUSTE CERVERA, Teresa, La Pobla de Vallbona (Valencia) (ES); GARCÍA QUILIS, José Luís, La Pobla de Vallbona (Valencia) (ES); LLUECA TRONCH, Sergio, La Pobla de Vallbona (Valencia) (ES); DE ALFONSO MARZAL, Ignacio, La Pobla de Vallbona (Valencia) (ES)
(74) Representative: Pons

(57) **Abstract**

The invention relates to the use of a composition which comprises one or more carotenoids for nematode control.

## Description

The invention relates to the use of a composition which comprises one or more carotenoids for nematode control.

### BACKGROUND ART

Plant-parasitic nematodes are microscopic, transparent animals and are characterised by the presence of the stylet, a lance-shaped structure located in the anterior region of the body with which they pierce plant cells and suck the contents out of them. The distribution of nematodes in the soil is irregular, forming aggregates or foci, and their main dispersal mechanism is passive with the movement of soil, machinery, tools or infected plant material, although they can also move by their own movement. The main factors favouring the development of the disease are the population levels of the nematode at the beginning of the crop, the susceptibility of the crop, and the soil temperature.

*Meloidogyne* species are the main nematological problem in horticultural crops with *M. incognita* and *M. javanica* being the most common species followed by M. *arenaria.* These nematodes cause root galls, a distinctive symptom of *Meloidogyne* parasitism that has diagnostic value for the genus. In contrast, the symptoms produced by plant-parasitic nematodes on the aerial part are non-specific and like those caused by other soil diseases or nutritional deficiencies. These symptoms are manifested by stunted initial growth, ascending chlorosis, reduced vigour, reduced fruit set and fruit size, and early senescence. These symptoms often go unnoticed or are attributed to other pests or diseases, or to crop problems (fertilisation, salinity, etc.), so that when they are detected, the population levels are very high, and the damage is irremediable.

Of all the important plant-parasitic nematodes, the most successful species are the sedentary groups which establish a permanent feeding site within the plant host and obtain nutrients while completing their lifecycles. Sedentary nematodes have a natural advantage over their migratory relatives due to a fascinating and complex method of host cell transformation resulting in the development a sustainable feeding structure. According to the American Society of Phytopathology (APS), it is estimated that economic losses in the agricultural sector due to nematodes represent 14% of the worldwide crop yield losses, which is almost 125 billion dollars annually, the major genera of phytoparasitic nematodes reported to cause crop losses were *Heterodera, Globodera, Meloidogyne, Radopholus, Pratylenchus, Tylenchulus, Telotylenchus, Tylenchorhynchus, Helycotylenchus Longidorus, Trichodorus, Xiphinema, Ditylenchus, Aphelenchoides* and *Anguina combat* (Concepción M. Mesa-Valle, Jose A. Garrido-Cardenas, Jose Cebrian-Carmona, Miguel Talavera and Francisco Manzano-Agugliaro, Agronomy 2020, 10, 1148).

Plant-parasitic nematodes are generally controlled using synthetic chemical nematicides, crop rotations, thermal treatments, and engineering of resistant cultivars. However, chemical nematicide use is becoming increasingly limited due to potential environmental problems and human and animal health concerns. For example, effective nematicides such as DBCP (1,2-Dibromo-3-chloropropane) and ethylene dibromide (1,2-Dibromoethane) have been withdrawn from the market due to their possible deleterious effects on humans and the environment. The highly toxic aldicarb (2-Methyl-2-(methylthio)propanal *O*-(*N*-methylcarbamoyl)oxime), which is used to control insects and nematodes, has been detected in groundwater. High levels of 1,3-D (1,3-dichloroprop-1-ene), the last generalise soil fumigant, have been detected in the air of California, where this nematicide is used intensively. Methyl bromide (Bromomethane), the most effective and widely used fumigant for controlling soil-borne diseases, nematodes, and weeds, has already been banned in some countries, and its complete withdrawal from the market is planned for most countries by international agreements due to its destructive potential to stratospheric ozone.

In addition, the increasing incidence of nematicide resistance is also fuelling the need for new nematicides. As an alternative to chemical nematicides, and based on our early findings, the use of natural products for the control of plant pathogens and/or pests is very promising (Fawzia H. Abdel-Rahman, Nina M. Alaniz & Mahmoud A. Saleh, Journal of Environmental Science and Health, 2012, 48, 16).

Accordingly, it would be desirable to have a composition for nematode control that do not present the above indicated toxicity problems but maintain their efficacy against nematodes.

### SUMMARY OF THE INVENTION

A first aspect of the present invention relates to the use of a composition which comprises one or more carotenoids for nematode control.

In another embodiment the invention relates to the use of the composition as defined above, wherein the carotenoids are selected from lutein, beta-carotene, astaxanthin and lycopene.

In another embodiment the invention relates to the use of the composition as defined above, wherein the carotenoids are dispersed in a carrier, preferably wherein the carrier is a vegetable oil, more preferably wherein the vegetable oil is selected from sunflower oil, corn oil, safflower oil, sunflower oil, soybean oil, avocado oil, jojoba oil, pumpkin oil, grapeseed oil, sesame oil, hazelnut oil, glycerol oil and glycerine vegetable ester oils, even mor preferably wherein the vegetable oil is selected from sunflower oil, corn oil, safflower oil, sunflower oil, soybean oil, avocado oil, jojoba oil, pumpkin oil, grapeseed oil, sesame oil, hazelnut oil and glycerol oil, and still more preferably wherein the vegetable oil is sunflower oil.

In another embodiment the invention relates to the use of the composition as defined above, which further comprises one or more tensioactives, and preferably which further comprises three tensioactives selected from polysorbate E20, polysorbate E80 and polysorbate E85.

In another embodiment the invention relates to the use of the composition as defined above, which further comprises a dispersant, preferably wherein the dispersant is selected from ethanol, isopropanol; glycerol, propylene glycol, butyl glycol, dipropylene glycol and sorbitol, and more preferably wherein the dispersant is butyl glycol.

In another embodiment the invention relates to the use of the composition as defined above, wherein the nematode is of the genus *Heterodera, Globodera, Meloidogyne, Radopholus, Rotylenchus, Pratylenchus, Tylenchulus, Telotylenchus, Tylenchorhynchus, Helicotylenchus Longidorus, Trichodorus, Xiphinema, Ditylenchus, Aphelenchoides* or *Anguina combat,* preferably wherein the nematode is of the genus *Xiphinema spp., Tylenchulus semipenetrans, Pratylenchus spp., Rotylenchus sp., Tylenchorhynchus spp., Helicotylenchus spp., Meloidogyne spp., Tylenchus spp.or Rhabditis spp,* more preferably wherein the nematode is of the genus *Meloidogyne* or *Tylenchulus,* and even more preferably wherein the nematode is of the genus *Meloidogyne spp.* or *Tylenchulus semipenetrans.*

In another embodiment the invention relates to the use of the composition as defined above for nematode control, wherein:
the nematode is of the genus *Heterodera, Globodera, Meloidogyne, Radopholus, Rotylenchus, Pratylenchus, Tylenchulus, Telotylenchus, Tylenchorhynchus, Helicotylenchus Longidorus, Trichodorus, Xiphinema, Ditylenchus, Aphelenchoides* or *Anguina combat,* preferably wherein the nematode is of the genus *Xiphinema spp., Tylenchulus semipenetrans, Pratylenchus spp., Rotylenchus sp., Tylenchorhynchus spp., Helicotylenchus spp., Meloidogyne spp., Tylenchus spp.*or *Rhabditis spp,* more preferably wherein the nematode is of the genus *Meloidogyne* or *Tylenchulus,* and even more preferably wherein the nematode is of the genus *Meloidogyne spp.* or *Tylenchulus semipenetrans;*
the carotenoids are selected from lutein, beta-carotene, astaxanthin and lycopene; and
the carrier is a vegetable oil, more preferably wherein the vegetable oil is selected from sunflower oil, corn oil, safflower oil, sunflower oil, soybean oil, avocado oil, jojoba oil, pumpkin oil, grapeseed oil, sesame oil, hazelnut oil, glycerol oil and glycerine vegetable ester oils, even mor preferably wherein the vegetable oil is selected from sunflower oil, corn oil, safflower oil, sunflower oil, soybean oil, avocado oil, jojoba oil, pumpkin oil, grapeseed oil, sesame oil, hazelnut oil and glycerol oil, and still more preferably wherein the vegetable oil is sunflower oil;
which further comprises:
   one or more tensioactives, and preferably which further comprises three tensioactives selected from polysorbate E20, polysorbate E80 and polysorbate E85; and
   a dispersant, preferably wherein the dispersant is selected from ethanol, isopropanol; glycerol, propylene glycol, butyl glycol, dipropylene glycol and sorbitol, and more preferably wherein the dispersant is butyl glycol.

In another embodiment the invention relates to the use of the composition as defined above for nematode control, wherein the nematode is of the *Heterodera, Globodera, Meloidogyne, Radopholus, Rotylenchus, Pratylenchus, Tylenchulus, Telotylenchus, Tylenchorhynchus, Helicotylenchus Longidorus, Trichodorus, Xiphinema, Ditylenchus, Aphelenchoides* or *Anguina combat,* preferably wherein the nematode is of the genus *Xiphinema spp., Tylenchulus semipenetrans, Pratylenchus spp., Rotylenchus sp., Tylenchorhynchus spp., Helicotylenchus spp., Meloidogyne spp., Tylenchus spp.or Rhabditis spp,* more preferably wherein the nematode is of the genus *Meloidogyne* or *Tylenchulus,* and even more preferably wherein the nematode is of the genus *Meloidogyne spp.* or *Tylenchulus semipenetrans,* which comprises:
a carotenoid selected from beta-carotene dispersed in sunflower oil, Astaxanthin dispersed in sunflower oil, lutein dispersed in sunflower oil and lycopene dispersed in sunflower oil;
three tensioactives selected from polysorbate E20, polysorbate E80 and polysorbate E85; and
the dispersant butyl glycol.

In another embodiment the invention relates to the use of the composition as defined above for nematode control, preferably wherein the nematode is of the genus *Heterodera, Globodera, Meloidogyne, Radopholus, Rotylenchus, Pratylenchus, Tylenchulus, Telotylenchus, Tylenchorhynchus, Helicotylenchus Longidorus, Trichodorus, Xiphinema, Ditylenchus, Aphelenchoides* or *Anguina combat,* preferably wherein the nematode is of the genus *Xiphinema spp., Tylenchulus semipenetrans, Pratylenchus spp., Rotylenchus sp., Tylenchorhynchus spp., Helicotylenchus spp., Meloidogyne spp., Tylenchus spp.or Rhabditis spp,* more preferably wherein the nematode is of the genus *Meloidogyne* or *Tylenchulus,* and even more preferably wherein the nematode is of the genus *Meloidogyne spp.* or *Tylenchulus semipenetrans,* which comprises:
a carotenoid selected from beta-carotene dispersed in sunflower oil, Astaxantin dispersed in sunflower oil, lutein dispersed in sunflower oil and lycopene dispersed in sunflower oil;
three tensioactives selected from polysorbate E20, polysorbate E80 and polysorbate E85; and
the dispersant butyl glycol,
wherein:
   the sunflower oil is from 2% to 10% (w/w of total composition) ;
   the carotenoid is from 0.1% to15% (w/w of total composition);
   the tensioactives are from 20% to 50% (w/w of total composition); and
   the dispersant is from 2% to 10% (w/w of total composition).

In another embodiment the invention relates to the use of the composition as defined above for nematode control, preferably wherein the nematode is of the genus *Heterodera, Globodera, Meloidogyne, Radopholus, Rotylenchus, Pratylenchus, Tylenchulus, Telotylenchus, Tylenchorhynchus, Helicotylenchus Longidorus, Trichodorus, Xiphinema, Ditylenchus, Aphelenchoides* or *Anguina combat,* preferably wherein the nematode is of the genus *Xiphinema spp., Tylenchulus semipenetrans, Pratylenchus spp., Rotylenchus sp., Tylenchorhynchus spp., Helicotylenchus spp., Meloidogyne spp., Tylenchus spp.or Rhabditis spp,* more preferably wherein the nematode is of the genus *Meloidogyne* or *Tylenchulus,* and even more preferably wherein the nematode is of the genus *Meloidogyne spp.* or *Tylenchulus semipenetrans,* which comprises:
beta-carotene (1.5% w/w of total composition) dispersed in sunflower oil (6%w/w of total composition);
three tensioactives selected from polysorbate E20 (15%w/w of total composition), polysorbate E80 (15%w/w of total composition) and polysorbate E85 (15%w/w of total composition);
the dispersant butyl glycol (5% w/w of total composition); and
water (42.5% w/w of total composition).

In another embodiment the invention relates to the use of the composition as defined above for nematode control, preferably wherein the nematode is of the genus *Heterodera, Globodera, Meloidogyne, Radopholus, Rotylenchus, Pratylenchus, Tylenchulus, Telotylenchus, Tylenchorhynchus, Helicotylenchus Longidorus, Trichodorus, Xiphinema, Ditylenchus, Aphelenchoides* or *Anguina combat,* preferably wherein the nematode is of the genus *Xiphinema spp., Tylenchulus semipenetrans, Pratylenchus spp., Rotylenchus sp., Tylenchorhynchus spp., Helicotylenchus spp., Meloidogyne spp., Tylenchus spp.*or *Rhabditis spp,* more preferably wherein the nematode is of the genus *Meloidogyne* or *Tylenchulus,* and even more preferably wherein the nematode is of the genus *Meloidogyne spp.* or *Tylenchulus semipenetrans,* which comprises:
astaxanthin (1.5% w/w of total composition) dispersed in sunflower oil (6%w/w of total composition);
three tensioactives selected from polysorbate E20 (15%w/w of total composition), polysorbate E80 (15%w/w of total composition) and polysorbate E85 (15%w/w of total composition);
the dispersant butyl glycol (5% w/w of total composition); and
water (42.5% w/w of total composition).

In another embodiment the invention relates to the use of the composition as defined above for nematode control, wherein the nematode is of the *Heterodera, Globodera, Meloidogyne, Radopholus, Rotylenchus, Pratylenchus, Tylenchulus, Telotylenchus, Tylenchorhynchus, Helicotylenchus Longidorus, Trichodorus, Xiphinema, Ditylenchus, Aphelenchoides* or *Anguina combat,* preferably wherein the nematode is of the genus *Xiphinema spp., Tylenchulus semipenetrans, Pratylenchus spp., Rotylenchus sp., Tylenchorhynchus spp., Helicotylenchus spp., Meloidogyne spp., Tylenchus spp.or Rhabditis spp,* more preferably wherein the nematode is of the genus *Meloidogyne* or *Tylenchulus,* and even more preferably wherein the nematode is of the genus *Meloidogyne spp.* or *Tylenchulus semipenetrans,* which comprises:
lutein (1.5% w/w of total composition) dispersed in sunflower oil (6%w/w of total composition);
three tensioactives selected from polysorbate E20 (15%w/w of total composition), polysorbate E80 (15%w/w of total composition) and polysorbate E85 (15%w/w of total composition);
the dispersant butyl glycol (5% w/w of total composition); and
water (42.5% w/w of total composition).

In another embodiment the invention relates to the use of the composition as defined above for nematode control, wherein the nematode is of the *Heterodera, Globodera, Meloidogyne, Radopholus, Rotylenchus, Pratylenchus, Tylenchulus, Telotylenchus, Tylenchorhynchus, Helicotylenchus Longidorus, Trichodorus, Xiphinema, Ditylenchus, Aphelenchoides* or *Anguina combat,* preferably wherein the nematode is of the genus *Xiphinema spp., Tylenchulus semipenetrans, Pratylenchus spp., Rotylenchus sp., Tylenchorhynchus spp., Helicotylenchus spp., Meloidogyne spp., Tylenchus spp.or Rhabditis spp,* more preferably wherein the nematode is of the genus *Meloidogyne* or *Tylenchulus,* and even more preferably wherein the nematode is of the genus *Meloidogyne spp.* or *Tylenchulus semipenetrans,* which comprises:
lycopene (1.5% w/w of total composition) dispersed in sunflower oil (6%w/w of total composition);
three tensioactives selected from polysorbate E20 (15%w/w of total composition), polysorbate E80 (15%w/w of total composition) and polysorbate E85 (15%w/w of total composition);
the dispersant butyl glycol (5% w/w of total composition); and
water (42.5% w/w of total composition).

As used herein, the term "nematode control" also refers to "nematicide" or "control of nematodes" and includes both nematode killing and repellency effects.

The term "carotenoid" or "carotenoids" refers to compounds that are members of the structurally diverse class of naturally occurring or synthetic carotenoid pigments, and structural analogues thereof. Carotenoid compounds are typically obtained from isoprenoid pathway intermediates. Carotenoids can be acyclic or cyclic, and may or may not contain oxygen, so that the term "carotenoids", in some embodiments, can include both carotenes and xanthophylls. Many carotenoids have strong light absorbing properties. In general, carotenoids are hydrocarbon compounds having a conjugated polyene carbon skeleton formally derived from the five-carbon compound isopentenyl pyrophosphate. In some embodiments, carotenoid compounds may be triterpenes (C30 diapocarotenoids), tetraterpenes (C40 carotenoids), or other compounds that are, for example, C35, C50, C60, C70, C80 in length or other lengths. In some embodiments, a carotenoid may have a length more than C200. More than 1000 different carotenoids have been identified in nature. Carotenoids include but are not limited to: apocarotenal, retinol, retinal, antheraxanthin, adonirubin, adonixanthin, astaxanthin, canthaxanthin, capsorubrin, beta-cryptoxanthin, alfa-carotene, beta-carotene, β,ψ-carotene, delta-carotene, ε-carotene, echinenone, 3-hydroxyechinenone, 3'-hydroxyechinenone, γ-carotene, γ-carotene, 4-keto-γ-carotene, ζ-carotene, α-cryptoxanthin, deoxyflexixanthin, diatoxanthin, 7,8-didehydroastaxanthin, didehydrolycopene, fucoxanthin, fucoxanthinol, isorenieratene, β-isorenieratene, lactucaxanthin, lutein, lycopene, neurosporaxanthin, myxobactone, neoxanthin, neurosporene, hydroxyneurosporene, peridinin, phytoene, rhodopin, rhodopin glucoside, 4-keto-rubixanthin, siphonaxanthin, spheroidene, spheroidenone, spirilloxanthin, torulene, 4-keto-torulene, 3-hydroxy-4-keto-torulene, uriolide, uriolide acetate, violaxanthin, zeaxanthin-beta-diglucoside, zeaxanthin, and C30 carotenoids. Additionally, carotenoid compounds include derivatives of these molecules, which may include hydroxy-, methoxy-, oxo-, epoxy-, carboxy-, or aldehydic functional groups. For example, carotenoids include oxygenated derivatives. Further, included carotenoid compounds include ester (e.g., glycoside ester, fatty acid ester) and sulfate derivatives (e.g., esterified xanthophylls).

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples are provided by way of illustration and are not intended to be limiting of the present invention.

### Examples

### Example 1: Process for preparing 100g of composition of reference N-09-02

N-09-02: Composition that contains beta-carotene (1.5% w/w of total composition) dispersed in sunflower oil (6%w/w), and mixed with:
- three tensioactives: polysorbate E20 (15%w/w of total composition), polysorbate E80 (15%w/w of total composition) and polysorbate E85 (15%w/w of total composition),
- the solvent butyl glycol (5% w/w of total composition) acting as a dispersant, and
- water (42.5% w/w of total composition)

To 1.50g of pure beta-carotene in a 250mL beaker were added 6.0g of sunflower oil at room temperature. The mixture was gently stirred using a glass rod until a homogeneous dispersion was obtained. Then a magnetic stirring bar was added and 15.0g of polysorbate E20, 15.0g of polysorbate E80 and 15.0g of polysorbate E85 were sequentially poured into the mixture with continuous stirring. At this point, 5.0g of butyl glycol were added and the stirring continued until complete homogenization. Finally, the mixture was made up to 100.0g by adding 42.5g of distilled water and further stirring for 60 minutes. The final product was then transferred to a 250mL amber-glass bottle and stored at room temperature for later use in bioactivity trials.

| **Pre-mix** | **% w/w of total composition** |
|---|---|
| SUNFLOWER OIL | 6,0 |
| B-CAROTENE | 1,5 |

| **Add the Pre-mix to:** | **% w/w of total composition** |
|---|---|
| POLYSORBATE 20 | 15,0 |
| POLYSORBATE 80 | 15,0 |
| POLYSORBATE 85 | 15,0 |
| BUTYL GLYCOL | 5,0 |
| WATER | 42,5 |
| **TOTAL** | **100,00** |

### Example 2: Process for preparing 100g of composition of reference N-09-03

N-09-03: Composition that contains astaxanthin (1.5% w/w of total composition) dispersed in sunflower oil (6%w/w of total composition), and mixed with:
- three tensioactives: polysorbate E20 (15%w/w of total composition), polysorbate E80 (15%w/w of total composition) and polysorbate E85 (15%w/w of total composition),
- the solvent butyl glycol (5% w/w of total composition) acting as a dispersant, and
- water (42.5% w/w of total composition)

To 1.50g of pure astaxanthin in a 250mL beaker were added 6.0g of sunflower oil at room temperature. The mixture was gently stirred using a glass rod until a homogeneous dispersion was obtained. Then a magnetic stirring bar was added and 15.0g of polysorbate E20, 15.0g of polysorbate E80 and 15.0g of polysorbate E85 were sequentially poured into the mixture with continuous stirring. At this point, 5.0g of butyl glycol were added and the stirring continued until complete homogenization. Finally, the mixture was made up to 100.0g by adding 42.5g of distilled water and further stirring for 60 minutes. The final product was then transferred to a 250mL amber-glass bottle and stored at room temperature for later use in bioactivity trials.

| **Pre-mix** | **% w/w of total composition** |
|---|---|
| SUNFLOWER OIL | 6,0 |
| ASTAXANTHIN | 1,5 |

| **Add the Pre-mix to:** | **% w/w of total composition** |
|---|---|
| POLYSORBATE 20 | 15,0 |
| POLYSORBATE 80 | 15,0 |
| POLYSORBATE 85 | 15,0 |
| BUTYL GLYCOL | 5,0 |
| WATER | 42,5 |
| **TOTAL** | **100,00** |

### Example 3: Process for preparing 100g of composition of reference N-09-04

N-09-04: Composition that contains lutein (1.5% w/w of total composition) dispersed in sunflower oil (6%w/w of total composition), and mixed with:
- three tensioactives: polysorbate E20 (15%w/w of total composition), polysorbate E80 (15%w/w of total composition) and polysorbate E85 (15%w/w of total composition),
- the solvent butyl glycol (5% w/w of total composition) acting as a dispersant, and
- water (42.5% w/w of total composition)

To 1.50g of pure lutein in a 250mL beaker were added 6.0g of sunflower oil at room temperature. The mixture was gently stirred using a glass rod until a homogeneous dispersion was obtained. Then a magnetic stirring bar was added and 15.0g of polysorbate E20, 15.0g of polysorbate E80 and 15.0g of polysorbate E85 were sequentially poured into the mixture with continuous stirring. At this point, 5.0g of butyl glycol were added and the stirring continued until complete homogenization. Finally, the mixture was made up to 100.0g by adding 42.5g of distilled water and further stirring for 60 minutes. The final product was then transferred to a 250mL amber-glass bottle and stored at room temperature for later use in bioactivity trials.

| **Pre-mix** | **% w/w of total composition** |
|---|---|
| SUNFLOWER OIL | 6,0 |
| LUTEIN | 1,5 |

| **Add the Pre-mix to:** | **% w/w of total composition** |
|---|---|
| POLYSORBATE 20 | 15,0 |
| POLYSORBATE 80 | 15,0 |
| POLYSORBATE 85 | 15,0 |
| BUTYL GLYCOL | 5,0 |
| WATER | 42,5 |
| **TOTAL** | **100,00** |

### Example 4: Process for preparing 100g of composition of reference N-09-06

N-09-06: Composition that contains lycopene (1.5% w/w of total composition) dispersed in sunflower oil (6%w/w of total composition), and mixed with:
- three tensioactives polysorbate E20 (15%w/w of total composition), polysorbate E80 (15%w/w of total composition) and polysorbate E85 (15%w/w of total composition),
- the solvent butyl glycol (5% w/w of total composition) acting as a dispersant, and
- water (42.5% w/w of total composition)

To 1.50g of pure lycopene in a 250mL beaker were added 6.0g of sunflower oil at room temperature. The mixture was gently stirred using a glass rod until a homogeneous dispersion was obtained. Then a magnetic stirring bar was added and 15.0g of polysorbate E20, 15.0g of polysorbate E80 and 15.0g of polysorbate E85 were sequentially poured into the mixture with continuous stirring. At this point, 5.0g of butyl glycol were added and the stirring continued until complete homogenization. Finally, the mixture was made up to 100.0g by adding 42.5g of distilled water and further stirring for 60 minutes. The final product was then transferred to a 250 ml, amber-glass bottle and stored at room temperature for later use in bioactivity trials.

| **Pre-mix** | **% w/w of total composition** |
|---|---|
| SUNFLOWER OIL | 6,0 |
| LYCOPENE | 1,5 |

| **Add the Pre-mix to:** | **% w/w of total composition** |
|---|---|
| POLYSORBATE 20 | 15,0 |
| POLYSORBATE 80 | 15,0 |
| POLYSORBATE 85 | 15,0 |
| BUTYLGLYCOL | 5,0 |
| WATER | 42,5 |
| **TOTAL** | **100,00** |

### Example 5: Effect of different carotenoids on nematode motility

The aim of this trial was to determine the contact effect of N-09-02, N-09-03, N-09-04, N-09-05, N-09-06 applied in aqueous dissolution on J2 of *Meloidogyne incognita* in Petri dishes.

Root-knot nematodes were collected in commercial fields with known problems of this pest in Torre Pacheco (Campo de Cartagena, Murcia). For trial extraction of nematodes, several egg masses were isolated and were placed in a Baermann tray, where Meloidogyne incognita eggs hatched. Individuals used were less than 24 hours-old after hatching to ensure that they were second-stage juveniles (J2).

The elemental plots consisted of one Petri dish filled with aqueous solution of the products (3 mL/L) with distilled water (2.0 mL/Petri dish). 200 individuals were introduced in each Petri dish. For each treatment 4 replications were run.

Assessments were carried out at 0, 24, 48, 72, 120 and 144 hours after test start. Nematode health and movement were assessed, using the observer criteria: nematodes with normal move were designated as "motion" (meaning motile individuals with infective capabilities), and nematodes without move were designated as "motionless". Table 1 details the evolution of the percentage of motile J2 *Meloidogyne incognita* upon exposure to the different carotenoids with time. Means followed by the same letter do not significantly differ (P=0.05, Student-Newman-Keuls).

For each assessment, J2 were observed under stereoscopic microscope, when assignation was not evident, nematodes were touched carefully with the entomologic needle to verify the motility. In all cases death nematodes were maintained in the Petri dishes and observed in each assessment to verify the recovery of motility during the time. In this way it was confirmed that nematodes recovered their motion. This effect is used to confirm that the products have a clear nematostatic effect.

**Table 1.**

| **Treatment** | **Carotenoid** | **0h** | **24h** | **48h** | **72h** | **96h** | **120h** | **144h** |
|---|---|---|---|---|---|---|---|---|
| Untreated | None | 100.00a | 100.00a | 100.00a | 100.00a | 98.75a | 98.20a | 97.50a |
| N-09-02 | β-Carotene | 100.00a | 100.00a | 100.00a | 96.50b | 91.50b | 31.75b | 21.25b |
| N-09-03 | Astaxanthin | 100.00a | 100.00a | 82.75c | 68.25e | 47.00c | 26.50c | 19.75b |
| N-09-04 | Lutein | 100.00a | 100.00a | 91.25b | 85.25d | 38.50d | 32.75b | 11.75c |
| N-09-06 | Lycopene | 100.00a | 100.00a | 92.00b | 92.25c | 47.25c | 13.50d | 2.25d |

All the tested solutions were clearly active when compared to control, affecting the motility of J2 individuals of *Meloidogyne incognita* in detriment of their root-infecting capabilities.

### Example 6: Nematicidal activity of N-09-04 and N-09-06 formulations against nematodes in liquid medium at two different concentrations.

The objective of this study was to test the efficacy of the products N-09-04 and N-09-06 against nematodes at two different doses (5.0 and 7.5 mL/L). The population of nematodes used for the tests was a mix of the following species: *Xiphinema spp., Tylenchulus semipenetrans, Pratylenchus spp., Tylenchorhynchus spp., Helicotylenchus spp., Meloidogyne spp., Tylenchus spp., Rhabditis spp.,* at a similar ratio.

Test unit consisted in a Petri-dish containing 10mL of the selected solution, to which 50 nematodes per were added. Motion ability was registered at different times, nematodes were considered alive if they spontaneously moved or after being mechanically stimulated with a thin wire. At the end of the study, the nematodes were exposed to a solution of NaOH to confirm the equivalence of immobility to mortality.

Results for number of surviving nematodes are shown in Table 2. Values were obtained from the average of 3 replicates per treatment. Means followed by the same letter do not significantly differ (P=0.05, Student-Newman-Keuls).

**Table 2**

| **Time after treatment** | **0h** | **4h** | **24h** | **48h** | **5 days** | **7days** |
|---|---|---|---|---|---|---|
| CONTROL | 50.0a | 50.0a | 50.0a | 50.0a | 50.0a | 50.0a |
| N-09-04 5.0 mL/L | 50.0a | 50.0a | 50.0a | 47.0a | 32.0bc | 33.0d |
| N-09-04 7.5 mL/L | 50.0a | 50.0a | 39.0b | 25.0b | 3.7d | 9.0e |
| N-09-06 5.0 mL/L | 50.0a | 50.0a | 50.0a | 48.7c | 23.3c | 40.7c |
| N-09-06 7.5 mL/L | 50.0a | 50.0a | 39.3b | 26.0b | 3.0d | 10.3e |

The result shows that all the compositions have a nematicidal effect comparing with the control.

### Example 7: Nematicidal activity of N-09-04 against Tylenchulus semipenetrans.

The aim of this study was to evaluate the mode of action and the efficacy of product N-09-04 at 2 concentrations (5.0 and 7.0 mL/L) against *Tylenchulus semipenetrans* compared to an untreated control.

The experimental units were 12L-capacity pots containing a sandy soil with a high population of the nematodes. The same batch of homogenised soil was used to fill all the units. The pots were irrigated to dripping with the corresponding treatment. After 7 days, the population of alive *Tylenchulus semipenetrans* was determined by examination of a soil sample under the microscope and expressed as number of individuals per 100 g of soil.

Results for number of surviving nematodes are shown in Table 2. Values were obtained from the average of 3 replicates per treatment. Means followed by the same letter do not significantly differ (P=0.05, Student-Newman-Keuls).

**Table 3**

| **Treatment** | **Dose (mL/L)** | **Number of alive *Tylenchulus semipenetrants* in 100g of soil** |
|---|---|---|
| CONTROL | - | 2,444.0a |
| N-09-04 | 5.0 | 43.7b |
| N-09-04 | 7.0 | 19.7c |

The result shows that all the compositions have a nematicidal effect comparing with the control.

### Example 8: Comparative field trial using N-09-04 vs. commercial references against Tylenchulus semipenetrans

The objective of this trial was to demonstrate the efficacy of the product N-09-04 against *Tylenchulus* semipenetrans in citrus under real field conditions. The following commercial nematicide products were used as references: Tervigo^{®} (Abamectin, 2%), Velum^{®} Prime (Fluopyram, 40%), BioAct^{®} Prime (*Paecilomyces lilacinus* Strain 251, 21.6%).

Trial was performed in a *Citrus sinensis* L. orchard located in La Vall d'Uixò (Castelló, Spain). Random plot design was used for the field trial, with three replicates. The different treatments were applied to the soil using the drip irrigation system. Soil was sampled near the roots and nematodes were isolated using Baermann-funnel method. All the extracted liquid sample was analyzed and alive nematodes were counted. The first assessment was done before starting the trial, to check if the population was established and to know the initial population. After that, two more assessments were carried out at 7 and 24 days after the treatment.

Results for number of surviving nematodes are shown in Table 4. Efficacy values are shown in brackets. Means followed by the same letter do not significantly differ (P=0.05, Student-Newman-Keuls).

**Table 4**

| **Time after treatment** | **0 days** | **7 days** | **24 days** |
|---|---|---|---|
| CONTROL Untreated | 1,796a | 1,945a (0%) | 2,283a (0%) |
| N-09-04 6.0L/Ha | 1,522a | 322b (83.4%) | 148b (93.5%) |
| Tervigo^{®} 2.4L/Ha | 1,438a | 295b (84.4%) | 239b (89.5%) |
| Velum^{®} Prime 0.375L/Ha | 1,662a | 3b (99.8%) | 6b (99.7%) |
| BioAct^{®} Prime 0.75L/Ha | 1,701a | 45b (97.7%) | 35b (98.5%) |

The results shown that product N-09-04 has efficacy in controlling *Tylenchulus* semipenetrans in citrus under real field conditions.

### Example 9: Comparative field trial using N-09-04 and N-09-06 vs. commercial reference

The aim of this study was to evaluate the efficacy of N-09-04 and N-09-06 for the control of soil pathogenic nematodes in tomato (*Solanum lycopersicum*) under greenhouse conditions.

The trial was carried out in Valle de Santiago (Guanajuato, Mexico). A commercial organic nematicide was selected as reference (Majesty^{®}, Arvensis). For all the treatments, three applications were made using the drip irrigation system, spaced 10 days apart.

Soil was sampled near the roots and alive nematodes were isolated and counted. Upon microscopic analysis, the nematode populations shown to be a consistent mixture of *Rotylenchus sp.* and *Telotylenchus sp.* Three samples per treatment were taken in order to provide representative results. An initial assessment was made just before the first application and a second one 7 days after the third application. Percentage of population growth was calculated from those values in order to compare the nematicide capability of each treatment as shown in Table 5.

**Table 5**

| **Treatment** | **Initial** | **Final** | **% Population growth** |
|---|---|---|---|
| CONTROL | 13 | 53 | 300% |
| N-09-04 (6 L/ha) | 13 | 20 | 54% |
| N-09-06 (6 L/ha) | 7 | 0 | -100% |
| Majesty^{®} (6 L/ha) | 33 | 14 | -57% |

All the treatments were found to be effective controlling nematodes by decreasing their populations when compared to an untreated reference.

### Example 10: Comparative field trial using N-09-04 at different doses vs. commercial references

The aim of this study was to evaluate the efficacy N-09-04 for the control of *Meloidogyne sp.* in tomato (*Solanum lycopersicum*) under greenhouse conditions.

The trial was carried out in Xilxes (Castelló, Spain) on potted tomato plant seedling (*cv.* Optima), just after transplanting. A batch of homogeneized and highly nematode-infested soil was employed for all the pots.

N-09-04 was tested at three concentrations (6.0, 7.5 and 9.0 mL/L). The following commercial nematicide products were used as references: Velum^{®} Prime (Fluopyram, 40%) and BioAct^{®} Prime (*Paecilomyces lilacinus* Strain 251, 21.6%). For all the treatments, the containers were irrigated to dripping with the corresponding treatment.

All the soil in the pots was sampled at 50 days after application and alive nematodes were isolated and counted. Three replicates per treatment were assessed at every time point. Number of *Meloidogyne sp.* inside the roots (individual per gram of root) was calculated from nematode counts and root weight in order to compare the nematicide capability of each treatment as shown in Table 6. Means followed by the same letter do not significantly differ (P=0.05, Student-Newman-Keuls).

**Table 6**

| **Treatment** | **Dose (mL/L)** | ***Meloidogyne sp.* (individuals/gram of root)** |
|---|---|---|
| CONTROL | - | 2,056 a |
| N-09-04 | 6.0 | 374 b |
| N-09-04 | 7.5 | 156 b |
| N-09-04 | 9.0 | 170 b |
| Velum^{®} Prime | 0.375 | 87 b |
| BioAct^{®} Prime | 1.0 | 661 b |

The results shown that product N-09-04 is efficient for the control of *Meloidogyne sp.* in tomato under greenhouse conditions. No statistical differences were detected among the tested doses for this trial.

### Example 11: Evidence of nematicide activity of N-09-04 vs formulation blank.

The objective of this study is to show the nematicide activity of N-09-04 formulation in comparison with blank (matrix of formulation without active ingredient) under controlled conditions, in soil pot with host to control *Meloidogyne sp.*

This study consists of 2 theses and an untreated control. The juveniles were obtained from a freshly extracted sample of roots of sports turf.

The trial was carried out laboratory under controlled conditions and plant pathogenic nematodes in soil in a volume of 100 ml per pot. The three replicates per treatment were worked in 100 ml pots of soil with 320 plant pathogenic nematodes in each pot.

Results for efficacy values are shown in Table 7. Means followed by the same letter do not significantly differ (P=0.05, Student-Newman-Keuls).

**Table 7**

| **Product** | **Dose** | **Lutein (%w/w of total composition)** | **Efficacy (%)** |
|---|---|---|---|
| **Control untreated** | - | 0 | 0.0 a |
| **N-09-04** | 5 mL/L | 1.5 | 88.3 b |
| **Blank** | 5 mL/L | 0 | 4.2 a |

The results showed that N-09-04 had high efficacy due to lutein content, while product blank showed similar values to the untreated control

## Claims

1. Use of a composition which comprises one or more carotenoids for nematode control.

2. The use of the composition according to claim 1, wherein the carotenoids are selected from lutein, beta-carotene, astaxanthin and lycopene.

3. The use of the composition according to any of claims 1 or 2, wherein the carotenoids are dispersed in a carrier.

4. The use of the composition according to claim 3, wherein the carrier is sunflower oil.

5. The use of the composition according to any of claims 1 to 4, which further comprises one or more tensioactives.

6. The use of the composition according to claim 5, which further comprises three tensioactives selected from polysorbate E20, polysorbate E80 and polysorbate E85.

7. The use of the composition according to any of claims 1 to 6, which further comprises a dispersant.

8. The use of the composition according to claim 7, wherein the dispersant is selected from ethanol, isopropanol; glycerol, propylene glycol, butyl glycol, dipropylene glycol and sorbitol.

9. The use of the composition as defined in claim 4, which comprises:
beta-carotene (1.5% w/w of total composition) dispersed in sunflower oil (6%w/w of total composition);
three tensioactives selected from polysorbate E20 (15%w/w of total composition), polysorbate E80 (15%w/w of total composition) and polysorbate E85 (15%w/w of total composition);
the dispersant butyl glycol (5% w/w of total composition); and
water (42.5% w/w of total composition).

10. The use of the composition as defined in claim 4, which comprises:
astaxanthin (1.5% w/w of total composition) dispersed in sunflower oil (6%w/w of total composition);
three tensioactives selected from polysorbate E20 (15%w/w of total composition), polysorbate E80 (15%w/w of total composition) and polysorbate E85 (15%w/w of total composition);
the dispersant butyl glycol (5% w/w of total composition); and
water (42.5% w/w of total composition).

11. The use of the composition as defined in claim 4, which comprises:
lutein (1.5% w/w of total composition) dispersed in sunflower oil (6%w/w of total composition);
three tensioactives selected from polysorbate E20 (15%w/w of total composition), polysorbate E80 (15%w/w of total composition) and polysorbate E85 (15%w/w of total composition);
the dispersant butyl glycol (5% w/w of total composition); and
water (42.5% w/w of total composition).

12. The use of the composition as defined in claim 4, which comprises:
lycopene (1.5% w/w of total composition) dispersed in sunflower oil (6%w/w of total composition);
three tensioactives selected from polysorbate E20 (15%w/w of total composition), polysorbate E80 (15%w/w of total composition) and polysorbate E85 (15%w/w of total composition);
the dispersant butyl glycol (5% w/w of total composition); and
water (42.5% w/w of total composition).

13. The use of the composition according to any of claims 1 to 12, wherein the nematode is of the genus *Heterodera, Globodera, Meloidogyne, Radopholus, Rotylenchus, Pratylenchus, Tylenchulus, Telotylenchus, Tylenchorhynchus, Helicotylenchus Longidorus, Trichodorus, Xiphinema, Ditylenchus, Aphelenchoides* or *Anguina combat.*

14. The use of the composition according to claim 13, wherein the nematode is of the genus *Meloidogyne* or *Tylenchulus.*
